# EUROPÄISCHE PATENTANMELDUNG

(11) **EP 3 827 923 A1**
(43) Veröffentlichungstag der Anmeldung: **02.06.2021**
(21) Anmeldenummer: 20215442.3
(22) Anmeldetag: 12.06.2012
(51) Int. Cl.: B23K 26/00

(54) **VERFAHREN ZUM BETRIEB EINER LASERMATERIALBEARBEITUNGSMASCHINE**

(30) Priorität: 29.06.2011 DE 102011078359
(62) Teilanmeldung aus: 12728208.5
(71) Anmelder: TRUMPF Werkzeugmaschinen GmbH + Co. KG, 71254 Ditzingen (DE)
(72) Erfinder: WEICK, Jürgen-Michael, 71679 Asperg (DE); Rupp, Thomas, 71636 Ludwigsburg (DE); Vees, Dominik, 72074 Tübingen (DE)
(74) Vertreter: Kohler Schmid Möbus Patentanwälte

(57) **Zusammenfassung**

Ein Verfahren zum Betrieb einer Lasermaterialbearbeitungsmaschine umfasst die Verfahrensschritte
a. Einbau eines optischen Elements (2), das einen Transponder (7) aufweist, in einen Laserbearbeitungskopf (1) der Lasermaterialbearbeitungsmaschine,
b. Auslesen zumindest eines Teils der in dem Transponder (7) betreffend das optische Element (2) gespeicherten Information,
c. Analyse der ausgelesenen Information durch eine Steuerung der Lasermaterialbearbeitungsmaschine,
d. Überprüfung des lagerichtigen Einbaus des optischen Elements (2) anhand des Transponders (7).

## Beschreibung

Die Erfindung betrifft ein Verfahren zum Betrieb einer Lasermaterial-bearbeitungsmaschine.

Lasermaterialbearbeitungsmaschinen weisen einen Laserbearbeitungskopf auf, der als optisches Element u.a. zumindest eine Linse oder im Fall von YAG-Lasermaterialbearbeitungsmaschinen als optisches Element neben Linsen als optisches Element auch ein Schutzfenster umfassen kann. Im Bereich der Lasermaterialbearbeitung haben optische Elemente keine Kennung, die über eine laserbeschriftete Materialnummer und ein Produktionsdatum hinausgeht. Bei der Lasermaterialbearbeitung im Hochleistungsbereich kommt es jedoch zu besonderen Problemstellungen. Insbesondere können die optischen Elemente verschmutzen und/oder verschleißen bzw. altern. Es ist wünschenswert, hierüber Informationen zu erhalten und diese Informationen geeignet einzusetzen.

Ein Verfahren zum Betrieb eines Laserbearbeitungskopfs mit den Merkmalen des Oberbegriffs des Patentanspruchs 1 ist aus der WO 2006/103104 A1 bekannt.

In der WO 2008/006416 A1 wird die Verwendung eines Transponders bei einem Brillenglas beschrieben.

Die DE 10 2005 010 479 A1 offenbart eine Vorrichtung mit mehreren optischen Elementen zur Insertion in einen Lichtstrahl, wobei jedes Element in seine Arbeitsposition im Strahlengang bringbar ist, wobei die Elemente in einem Magazin bereitgestellt sind und über einen Wechselmechanismus von einer Bereitstellungsposition in die Arbeitsposition verbringbar sind.

Aufgabe der vorliegenden Erfindung ist es, den lagerichtigen Einbau des optischen Elements überprüfen zu können.

Gelöst wird diese Aufgabe erfindungsgemäß durch ein Verfahren mit den Merkmalen des Patentanspruchs 1.

Dadurch ist es der Lasermaterialbearbeitungsmaschine zum einen möglich, zu bestimmen, ob das eingebaute optische Element für die bevorstehende Lasermaterialbearbeitung überhaupt geeignet ist und ob das eingebaute optische Element für die entsprechende Lasermaterialbearbeitungsmaschine überhaupt zugelassen ist. Außerdem können in dem Transponder Informationen gespeichert sein, die es der Lasermaterialbearbeitungsmaschine erlauben, den Lasermaterialbearbeitungsprozess so einzustellen, dass eine optimierte Materialbearbeitung durchgeführt werden kann.

Als Information betreffend das optische Element kann zumindest eine der folgenden Informationen ausgelesen werden: Materialnummer, Seriennummer, Hersteller, Produktionsdatum, Chargennummer, Rohmaterial, Emissivität, Inbetriebnahmedatum, Transmission für eine Prüfwellenlänge. Durch die Erfassung dieser Parameter ist es beispielsweise möglich, eine Charge eines optischen Elements zu erkennen, welche ein Problem durch Fertigungsfehler hat. Die Lasermaterialbearbeitungsmaschine kann dadurch gezielt die schadhaften optischen Elemente erkennen und verhindern, dass mit diesen schadhaften optischen Elementen eine Lasermaterialbearbeitung durchgeführt wird. Der Lasermaterialbearbeitungsmaschine kann beispielsweise über Webdienste mitgeteilt werden, welche optischen Elemente, die beispielsweise über Materialnummer, Hersteller oder Produktionsdatum zu identifizieren sind, schadhaft sind.

Besonders vorteilhaft ist es, wenn Informationen betreffend die Verwendung des optischen Elements in den Transponder geschrieben werden. Wie bereits erwähnt, kann die Dauer der Verwendung des optischen Elements gespeichert werden. Auch können Reinigungszyklen bzw. die Anzahl der Reinigungen, die Absorptionshistorie, die Betriebsstunden, insbesondere die Laser-ein-Zeiten, die Laserleistung und -leistungsdichten und/oder die Betriebsarten des Lasers, also cw (continuous wave) oder gepulst, gespeichert und anschließend auch wieder ausgelesen und bei Bedarf angezeigt werden.

Entsprechende Daten, die über die Laserbearbeitungsmaschine, beispielsweise direkt über die Schneidkopfelektronik und/oder indirekt über die an die Lasersteuerung erfasst werden, können über Anbindung an die Lese-/Schreibeinrichtung auf den Transponder übertragen werden. Die Anbindung kann sowohl über Leitungen als auch andere Mittel zur Datenübertragung ohne physische Verbindungen ausgebildet sein.

Gemäß einer Verfahrensvariante kann vorgesehen sein, dass der lagerichtige Einbau des optischen Elements anhand des Transponders überprüft wird. Wird das optische Element beispielsweise auf dem Kopf stehend eingebaut, kann der Transponder nicht lesbar sein. Dadurch kann erkannt werden, dass das optische Element nicht richtig eingebaut wurde.

Gemäß einer weiteren Verfahrensvariante kann anhand des Transponders überprüft werden, ob es sich um ein für den Laserbearbeitungskopf oder den durchzuführenden Prozess zugelassenes optisches Element handelt.

Dies kann durch Auslesen der entsprechenden Informationen aus dem Transponder festgestellt werden.

Mit einem oben genannten optischen Element ist es möglich, nicht nur Daten zum Einbauzustand des optischen Elements, sondern auch sich ändernde Eigenschaften während der Nutzung des optischen Elements zu hinterlegen und bei der Lasermaterialbearbeitung zu berücksichtigen. Dies ist insbesondere bei der Laserbearbeitung im Hochleistungsbereich, d.h. bei Leistungen ≥ 1kW vorteilhaft. Das optische Element ist daher vorzugsweise für den Einsatz bei Laserleistungen ≥ 1kW geeignet.

Bei dem optischen Element kann es sich um ein transmissives oder reflektives optisches Element handeln. Insbesondere kann es sich um ein optisches Element als solches, nämlich ohne Halterung, Fassung, Gehäuse oder dgl. handeln. Es kann sich also um ein optisches Element im Sinne eines optisch aktiven Elements, wie zum Beispiel eine Linse, ein Schutzfenster, einen Strahlteiler, einen Reflektor, einen Spiegel, einen Filter oder dgl. handeln. Unter einem optischen Element im Sinne der Erfindung kann jedoch auch ein optisch wirksames Element mit einem Anbauteil, wie einer Fassung, Halterung, Gehäuse oder dgl. verstanden werden.

Im Falle eines transmissiven optischen Elements kann beispielsweise nur ein zentraler Bereich im Betrieb optisch genutzt werden bzw. von einem Laserstrahl erfasst werden, während ein Randbereich vom Laserstrahl nicht erfasst bzw. optisch nicht genutzt wird. Der Transponder könnte dann im Randbereich angeordnet werden, ohne die optischen Eigenschaften des optischen Elements im Betrieb zu stören.

Im Falle eines reflektiven optischen Elements kann beispielsweise die der reflektierenden Seite gegenüberliegende Fläche des optischen Elements optisch ungenutzt sein und von dem Laserstrahl nicht erfasst werden. Der Transponder könnte dann an dieser Fläche, insbesondere an der Rückseite des optischen Elements, angeordnet werden.

Auch ist es denkbar, dass der Transponder so an dem optischen Element angeordnet wird, dass er einen Teil des an sich optisch nutzbaren Flächenbereichs abdeckt bzw. abschattet. Dadurch wird dieser abgedeckte bzw. abgeschattete Flächenanteil im Sinne der Erfindung zu einer im Betrieb der Laserbearbeitungsmaschine optisch ungenutzten und/oder vom Laserstrahl nicht erfassten Fläche.

Besondere Vorteile ergeben sich, wenn der Transponder beschreibbar ist. Dadurch können Informationen bezüglich der Historie, insbesondere des Lebenslaufs des optischen Elements, bezüglich des Verschmutzungsgrads, also insbesondere Informationen, die sich während der Verwendungsdauer des optischen Elements verändern, in einem Speicher des Transponders abgelegt werden. Eine Steuerung der Lasermaterialbearbeitungsmaschine kann dadurch beispielsweise die Schneidstunden eines optischen Elements registrieren, da auch bei einem Wechsel des Laserbearbeitungskopfs immer die eingebaute Linse eindeutig erkannt werden kann. Ebenso können Reinigungszyklen und Absorptionshistorie gespeichert und entsprechend angezeigt werden. Ein Verwender bekommt Transparenz über ein wichtiges Verschleißteil seiner Lasermaterialbearbeitungsmaschine. Besonders verschleißfördernde Verfahren (z.B. das Schneiden mit Pressluft) können so in der Nutzungshistorie entdeckt werden, indem die Absorptionszunahme über die Einsatzdauer registriert wird. Auf diese Weise können beispielsweise verschleißfördernde Prozesse, die das optische Element erfahren hat, identifiziert werden, um Aussagen über die Restlebensdauer des optischen Elements treffen zu können. Zum anderen kann erkannt werden, ob ein Prozess verschleißfördernd auf das optische Element wirkt.

Eine Anordnung des Transponders im Bereich der Umfangsfläche des optischen Elements hat den Vorteil, dass durch den Transponder von dem optischen Element wenig verdeckt wird, so dass die optischen Eigenschaften des optischen Elements, wie z.B. die Größe der optisch nutzbaren Fläche des optischen Elements, durch den Transponder nur unwesentlich beeinträchtigt werden. Außerdem kann eine entsprechende Lese- und/oder Schreibeinrichtung besonders einfach in einem Laserbearbeitungskopf im Bereich der Umfangsfläche des optischen Elements angeordnet werden. Dadurch ist es möglich, Transponder und Lese- und/oder Schreibeinrichtung nahe beieinander anzuordnen, so dass nur eine geringe Sendeleistung für eine drahtlose Übertragung der Information vom Transponder zur Lese- und/oder Schreibeinrichtung oder in umgekehrter Richtung notwendig ist.

Besonders vorteilhaft ist es, wenn der Transponder an der Umfangsfläche angeordnet ist. Dadurch ist es möglich, dass Information vom Transponder zur Lese- und/oder Schreibeinrichtung oder in umgekehrter Richtung in radialer Richtung des optischen Elements übertragen wird. Dadurch sind die Übertragungswege besonders kurz. Auch wird dadurch in Transmissionsrichtung des optischen Elements keine Fläche des optischen Elements durch den Transponder abgedeckt.

Es kann vorgesehen sein, dass die Fläche, insbesondere die Umfangsfläche, einen ebenen Abschnitt, insbesondere einen planen Flächenanschliff oder Flächenanschnitt, aufweist, an dem der Transponder angeordnet ist. An einem ebenen Abschnitt kann der Transponder besonders gut und zuverlässig befestigt werden, beispielsweise kann er an einem ebenen Abschnitt im Vergleich zu einem gebogenen Abschnitt besser angeklebt werden. Weiterhin kann über den ebenen Abschnitt der Umfangsfläche ein lagerichtiger Einbau des optischen Elements erzwungen werden, indem beispielsweise eine Halterung einen korrespondierenden ebenen Abschnitt aufweist oder anderweitig entsprechend ausgebildet ist.

Wie bereits erwähnt, ist es im Bereich der Lasermaterialbearbeitung im Hochleistungsbereich besonders vorteilhaft, wenn in dem Transponder eine Information betreffend die Historie und/oder den Zustand des optischen Elements gespeichert ist.

Der Transponder kann als RFID-Transponder ausgebildet sein. Wird ein RFID-Transponder verwendet, so kann die Information zwischen Transponder und Lese- und/oder Schreibeinrichtung drahtlos ausgetauscht werden. Außerdem kann ein RFID-Transponder ohne eigene Energieversorgung auskommen. Ein besonders kleiner Aufbau des Transponders ergibt sich, wenn dieser aus Polymeren hergestellt ist. Die Kopplung mit einem Lesegerät kann durch magnetische Wechselfelder geringer Reichweite oder durch hochfrequente Radiowellen erfolgen. Damit können die Daten nicht nur übertragen, sondern auch der Transponder mit Energie versorgt werden.

Wenn es sich um einen beschreibbaren RFID-Transponder handelt, so kann dieser einen EEPROM-Speicher oder einen FRAM-Speicher aufweisen. Denkbar ist grundsätzlich auch ein SRAM-Speicher. Dieser würde jedoch eine eigene Stromversorgung benötigen.

Ein Laserbearbeitungskopf, insbesondere ein Laserschneidkopf, kann eine Halterung für ein optisches Element aufweisen. Weiterhin kann der Laserbearbeitungskopf eine Lese- und/oder Schreibeinrichtung aufweisen, die dem Transponder des optischen Elements zugeordnet ist. Der Transponder und die Lese- und/oder Schreibeinrichtung sind dabei bei eingebautem optischem Element vorzugsweise gegenüberliegend angeordnet, so dass diese nahe beieinander angeordnet sind. Dadurch ist es möglich, dass die Informationen einfach und störungsfrei gelesen werden können. Über die Materialnummer des optischen Elements, insbesondere, wenn es sich dabei um eine Linse handelt, ist eine Prüfung auf die korrekte Brennweite möglich. Die Brennweite kann aber auch als eigener Wert hinterlegt, oder an andere Kenndaten gebunden indirekt ableitbar sein. Dadurch kann ein Schaden durch den Einbau einer falschen Brennweite verhindert werden. Über die eindeutige Seriennummer, die aus dem Transponder ausgelesen werden kann, kann sichergestellt werden, dass es sich um ein freigegebenes optisches Element handelt. Auch hier können Daten zur Freigabe direkt hinterlegt und abrufbar sein.

Für die Funktion einer Linsensensorik ist eine Transmission bei 500nm wichtig. Ist in dem Transponder eine Information über die Rohmaterialquelle des optischen Elements gespeichert, ist eine Verbesserung der Genauigkeit denkbar. Dies gilt insbesondere für eine CO2-Sensorik. Bei einem YAG-Laser könnte stattdessen die Emissivität des optischen Elements in dem Transponder gespeichert sein und ein zu übergebender Parameter sein.

An der Halterung für das optische Element kann eine Orientierungshilfe für den lagerichtigen Einbau des optischen Elements vorgesehen sein. Insbesondere kann die Orientierungshilfe dabei mit einem ebenen Abschnitt am Umfang des optischen Elements zusammenwirken. Somit kann über die Formgebung der Halterung und des optischen Elements ein lagerichtiger Einbau erzwungen werden.

Um Beschädigungen der Lese- und/oder Schreibeinrichtung zu verhindern kann vorgesehen sein, dass das optische Element in einem Hochdruckraum angeordnet ist, in dem im Betrieb des Laserbearbeitungskopfs ein Gas unter hohem Druck angeordnet ist und die Lese- und/oder Schreibeinrichtung in einem Niederdruckraum angeordnet ist, in dem im Betrieb des Laserbearbeitungskopfs ein Gas bei einem niedrigeren Druck als im Hochdruckraum angeordnet ist, wobei der Hochdruckraum und der Niederdruckraum durch eine Wandung getrennt sind, die zumindest in einem Bereich einen nichtmetallischen Werkstoff aufweist. Dadurch, dass in einem Bereich ein nichtmetallischer Werkstoff, insbesondere ein dielektrischer Werkstoff, vorgesehen ist, kann sichergestellt werden, dass Informationen zwischen dem Transponder und der Lese- und/oder Schreibeinrichtung ausgetauscht werden können. Dies wäre - nach derzeitigem allgemeinen Kenntnisstand - nicht möglich, wäre die Wandung vollständig aus metallischem Werkstoff ausgebildet.

Zu diesem Zweck kann die Wandung eine Durchgangsöffnung aufweisen, die durch ein Element aus nichtmetallischem Werkstoff verschlossen ist. Beispielsweise kann die Durchgangsöffnung durch ein Quarzfenster verschlossen sein.

Insbesondere kann das optische Element in einer Linsenpatrone angeordnet sein, deren Wandung eine durch ein Element aus nichtmetallischem Werkstoff verschlossene Durchgangsöffnung aufweist. Die Durchgangsöffnung kann dabei beispielsweise eine Bohrung in der Wandung in der Linsenpatrone sein. Der Durchmesser der Durchgangsöffnung sollte dabei vorzugsweise in etwa einem Antennendurchmesser des Transponders entsprechen. Als besonders vorteilhaft hat sich ein Durchmesser für die Durchgangsöffnung von 6 mm herausgestellt.

Besonders einfach kann die Durchgangsöffnung durch das Element aus nichtmetallischem Werkstoff verschlossen werden, wenn dieses eingeklebt ist.

Weitere Merkmale und Vorteile der Erfindung ergeben sich aus der nachfolgenden Beschreibung, anhand der Figuren der Zeichnung, die erfindungswesentliche Einzelheiten zeigen, und aus den Ansprüchen. Die einzelnen Merkmale können je einzeln für sich oder zu mehreren in beliebiger Kombination bei einer Variante der Erfindung verwirklicht sein.

Es zeigen:
- Fig. 1: eine Längsschnittdarstellung durch einen Laserbearbeitungskopf einer Lasermaterialbearbeitungsmaschine, in den ein optisches Element eingebaut ist;
- Fig. 2: einen vergrößerten Ausschnitt des Laserbearbeitungskopfs der Figur 1;
- Fig. 3: eine vergrößerte Querschnittsdarstellung des Laserbearbeitungskopfs im Bereich des optischen Elements.

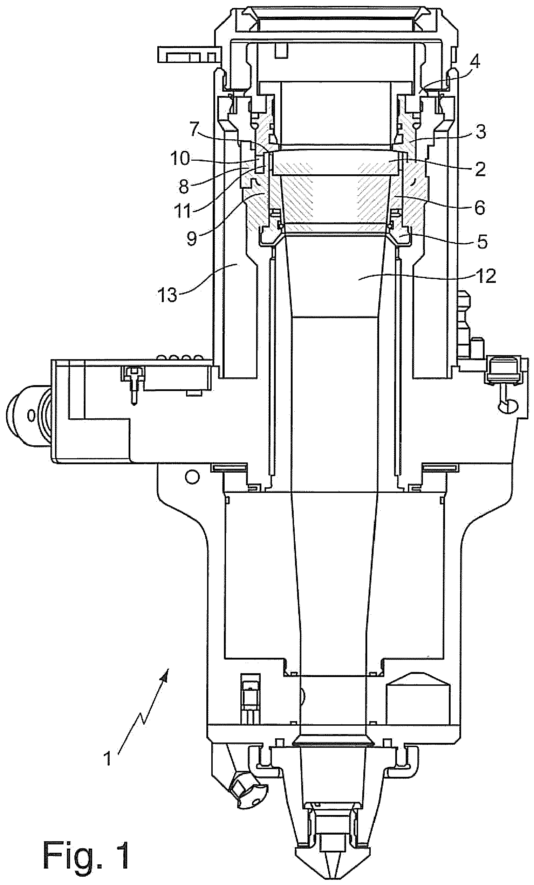

Die Figur 1 zeigt eine Längsschnittdarstellung eines als Laserschneidkopf ausgebildeten Laserbearbeitungskopfs 1 einer Lasermaterialbearbeitungsmaschine. Der Laserbearbeitungskopf 1 weist ein als Linse ausgebildetes optisches Element 2 auf. Dieses ist in einer Linsenpatrone 3 angeordnet, wobei die Linsenpatrone 3 austauschbar, insbesondere aus dem Laserbearbeitungskopf 1 herausnehmbar ist. Am oberen Ende der Linsenpatrone 3 ist ein Gewindering 4 dargestellt, der die Linsenpatrone im Laserbearbeitungskopf 1 hält. Der Gewindering 5 hält das optische Element 2 über einen Abstandshalter 6 in der Linsenpatrone 3 und damit im Laserbearbeitungskopf 1.

An dem optischen Element 2 ist ein als RFID-Etikett ausgebildeter Transponder 7 angeordnet. Dieser befindet sich gegenüberliegend einer Lese- und/oder Schreibeinrichtung 8. Durch die Lese- und/oder Schreibeinrichtung 8 können Informationen von dem Transponder 7 ausgelesen und in einigen Fällen auch Informationen in den Transponder 7 geschrieben werden. Die Lese- und/oder Schreibeinrichtung 8 steht mit einer hier nicht dargestellten Steuerung der Lasermaterialbearbeitungsmaschine in Verbindung.

Die Wandung 9 der Linsenpatrone 3 weist eine Durchgangsöffnung 10 auf, die durch ein Element 11 aus nichtmetallischem Werkstoff verschlossen ist. Durch das Element 11 aus nichtmetallischem Werkstoff wird ein Hochdruckraum 12, in dem das optische Element 2 angeordnet ist, von einem Niederdruckraum 13, in dem die Lese- und/oder Schreibeinrichtung 8 angeordnet ist, getrennt. Während die Wandung 9 aus metallischem Werkstoff ausgebildet ist, ist das Element 11 aus nicht-metallischem Werkstoff, insbesondere aus einem dielektrischen Werkstoff, wie beispielsweise Quarz, Kunststoff, oder Keramik, ausgebildet. Hierdurch wird ein Informationsaustausch zwischen Transponder 7 und Lese- und/oder Schreibeinrichtung 8 ermöglicht, der nicht möglich wäre, wenn die Wandung 9 vollständig aus metallischem Werkstoff ausgebildet wäre.

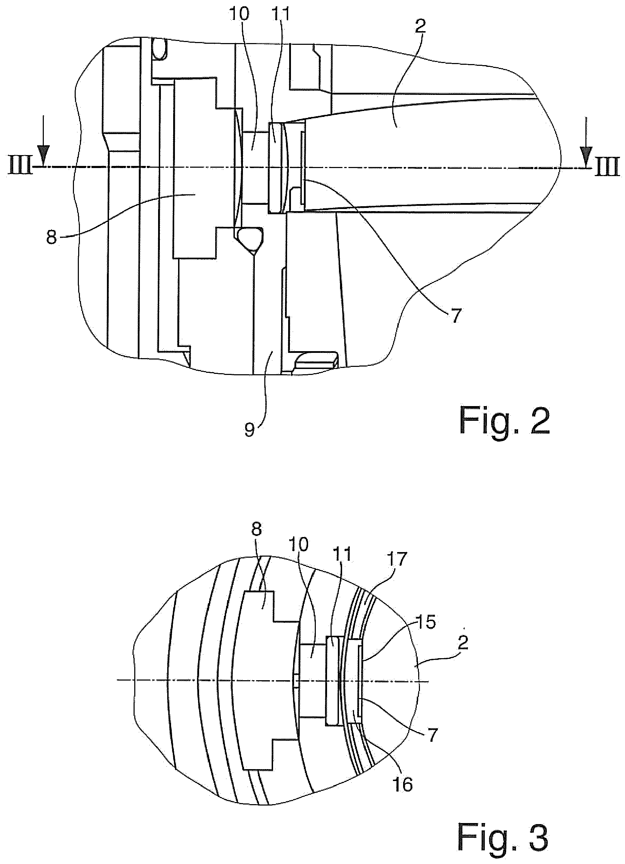

Aus der Detaildarstellung der Figur 2 ergibt sich, dass der Durchmesser des Elements 11 größer ist als der Durchmesser der Durchgangsöffnung 10. Insbesondere kann das Element 11 einen Durchmesser von etwa 8 mm aufweisen, während die Durchgangsöffnung 10 vorzugsweise einen Durchmesser von 6 mm aufweist. Die Größe der Durchgangsöffnung 10 wird dabei maßgeblich durch die Größe einer Antenne des Transponders 7 bestimmt.

Die Figur 3 zeigt eine Schnittdarstellung gemäß der Linie III-III der Figur 2. Hier ist besonders deutlich zu erkennen, dass das optische Element 2 in einem Abschnitt 15 eine ebene Umfangsfläche aufweist. An dieser ebenen Umfangsfläche im Abschnitt 15 ist der Transponder 7 angeordnet. Insbesondere ist der Transponder 7 in einer Ausnehmung 16 der Halterung 17 für das optische Element 2 vorgesehen. Die Ausnehmung 16 stellt dadurch eine Orientierungshilfe für den Einbau des optischen Elements 2 dar. In der Figur 3 sind weiterhin die Durchgangsöffnung 10, das Element 11 und die Lese- und/oder Schreibeinrichtung 8 zu erkennen.

## Patentansprüche

1. Verfahren zum Betrieb einer Lasermaterialbearbeitungsmaschine mit den Verfahrensschritten:
a. Einbau eines optischen Elements (2), das einen Transponder (7) aufweist, in einen Laserbearbeitungskopf (1) der Lasermaterialbearbeitungsmaschine,
b. Auslesen zumindest eines Teils der in dem Transponder (7) betreffend das optische Element (2) gespeicherten Information,
c. Analyse der ausgelesenen Information durch eine Steuerung der Lasermaterialbearbeitungsmaschine, **gekennzeichnet durch**
d. Überprüfung des lagerichtigen Einbaus des optischen Elements (2) anhand des Transponders (7).

2. Verfahren nach Anspruch 1, **dadurch gekennzeichnet, dass** anhand des Transponders (7) überprüft wird, ob es sich um ein für den Laserbearbeitungskopf (1) oder den durchzuführenden Prozess zugelassenes optisches Element (2) handelt.

3. Verfahren nach einem der vorhergehenden Ansprüche, **dadurch gekennzeichnet, dass** als Information betreffend das optische Element (2) zumindest eine der folgenden Informationen ausgelesen wird: Materialnummer, Seriennummer, Hersteller, Produktionsdatum, Chargennummer, Inbetriebnahmedatum, Rohmaterial, Emissivität, Transmission für eine Prüfwellenlänge.

4. Verfahren nach einem der vorhergehenden Ansprüche, **dadurch gekennzeichnet, dass** Informationen betreffend die Verwendung des optischen Elements (2) in den Transponder (7) geschrieben werden.

5. Verfahren nach Anspruch 4, **dadurch gekennzeichnet, dass** zumindest eine der folgenden Informationen in den Transponder (7) geschrieben wird: Schneidstunden des optischen Elements (2), Rei-nigungszyklen bzw. die Anzahl der Reinigungen, die Absorptionshistorie, die Betriebsstunden, insbesondere die Laser-ein-Zeiten, die Laserleistung und -leistungsdichten und/oder die Betriebsarten des Lasers.
